# DEMANDE DE BREVET EUROPEEN

(11) **EP 1 980 847 A2**
(43) Date de publication de la demande: **15.10.2008**
(21) Numéro de dépôt: 08380111.8
(22) Date de dépôt: 08.04.2008
(51) Int. Cl.: G01N 25/72

(54) **Méthode d'inspection de défauts se produisant dans du matériau composite en fibre de carbone par perforation de la poche durant le processus de fabrication**

(30) Priorité: 11.04.2007 ES 200700949
(71) Demandeur: Fundacion Centro de Tecnologicas Aeronauticas, 01510 Minano Alava (ES)
(72) Inventeur: Vela Martinez, Juan Pedro, 01510 Minano (Alava) (ES); Saez de Ocariz Granja, Idurre, 01510 Minano (Alava) (ES); Arroyo Gradillas, Pedro, 01510 Minano (Alava) (ES); Alonso Polanco, Pedro, 01510 Minano (Alava) (ES)
(74) Mandataire: Urizar Barandiaran, Vicente

(57) **Abrégé**

Méthode d'inspection de défauts se produisant dans du matériau composite en fibre de carbone par perforation de la poche durant le processus de fabrication, dans laquelle l'on met en place une caméra thermogaphique (102) et des lampes (103) pour chauffer le matériau moyennant une pulsation de lumière (thermographie infrarouge pulsée) (109) en face du spécimen (101) à inspecter, et les données sont transférées à l'ordinateur ou au système de saisie (104), et l'existence de défauts est déterminée par l'apparition de contrastes sur les thermogrammes obtenus.

## Description

L'application prioritaire de cette méthode d'inspection non destructive est la détection de défauts dans du matériau composite fabriqué avec de la fibre de carbone, en raison de perforations dans les poches à vide utilisées dans cette fabrication (aussi bien des parties monolithiques que des parties sandwiches avec la peau composite de fibre de carbone). Il s'agit d'appliquer la technique de la thermographie infrarouge active avec excitation lumineuse ou optique, pour localiser de façon non destructive et sans contact des zones du matériau composite où se trouve le défaut. Les zones défectueuses peuvent être des zones critiques par lesquelles commence une rupture par fatigue ou par d'autres sollicitations statiques, ainsi que par impacts.

Le champ d'application des matériaux composites en fibres de carbone est très vaste, la détection des défauts grâce à la technique thermographique étant également applicable à des processus de contrôle de la qualité dans la fabrication de pièces et de composants avec ce type de matériaux (monolithiques et du type sandwich) :
➢ Avions et hélicoptères : les matériaux composites en fibre de carbone sont utilisés dans les fuselages, les ailes et les surfaces de contrôle (élévateurs, flaps, timons, etc.)
➢ Voitures : sur des automobiles à usage urbain et de compétition sportive (par exemple, en Formule 1, rallyes, etc.) pour des pièces de carrosserie, carénages, sièges, casques, cockpit, etc.
➢ Bateaux : en même temps que la fibre de verre, on utilise des matériaux en fibres de carbone dans les coques, la structure interne, les mâts, les gouvernails, etc.
➢ Aérogénérateurs : les pales essentiellement.

### SECTEUR DE LA TECHNIQUE

La méthode d'inspection moyennant thermographie infrarouge peut être appliquée au contrôle de la qualité des pièces et des produits fabriqués en matériau composite en fibres de carbone dans les industries :
➢ Aéronautique
➢ Automobile
➢ Navale
➢ Éolienne

### ÉTAT DE LA TECHNIQUE ET JUSTIFICATION DE LA NÉCESSITÉ

Dans le secteur aérospatial notamment, mais également dans celui de l'automobile, l'éolien et dans le naval, les matériaux composites en fibre de carbone sont de plus en plus utilisés. Cette utilisation est due à l'avantage qu'offrent ces matériaux par rapport à ceux qui sont traditionnellement utilisés comme les métaux (aciers, aluminiums,...). Cet avantage repose sur la réduction de poids qu'ils offrent, ainsi que sur des prestations mécaniques élevées, outre une grande capacité pour être moulés comme surfaces à formes complexes.

Ces matériaux composites peuvent être du type monolithique (uniquement formés par le stratifié de toiles de fibre de carbone imbibées de résine) ou du type sandwich (peau de stratifié et noyau de différents matériaux). Les techniques de fabrication employées sont très variées et elles sont choisies normalement selon la responsabilité structurale de la pièce. L'une des techniques de fabrication les plus importantes est celle des pré-imprégnés. Dans ce cas, le stratifié est fabriqué en superposant des tissus ou un ruban de fibre de carbone, qui sont pré-imprégnés de résine et qui sont soumis à un séchage sous pression (si le séchage a lieu dans une étuve, la pression extérieure n'est pas utilisée, contrairement au séchage dans un autoclave). En premier lieu, on ferme l'ensemble des toiles pré-imprégnées sous la forme souhaitée dans une poche en plastique qui est scellée sur son contour et à laquelle on joint une pompe à vide, qui extrait l'air de la poche en produisant le vide. La pièce est alors soumise à un séchage : température et pression extérieures. Si, pour une raison quelconque, la poche se déchire ou est perforée, il existera dans cette zone une variation de pression à laquelle est soumise la pièce. Cela peut provoquer des changements dans les propriétés mécaniques du matériau, ce qui affectera sa résistance et son comportement à la fatigue.

Le problème de perte de vide ou, ce qui est la même chose, d'entrée de pression par déchirure, grande ou petite, de la poche à vide, représente un risque pour la pièce variable en fonction du moment du processus de séchage où elle a lieu et du fait de la variation de pression et de la température de l'air qui entre en contact avec la pièce à travers la perforation.

L'entrée de pression ou la déchirure de la poche peut donner lieu à des défauts, dans certains cas difficilement détectables par des techniques d'inspection conventionnelles : du manque ou de l'excès de résine et l'existence de porosité dans la pièce au brûlage de la résine dans des zones plus ou moins grandes. Dans ces zones, elle peut ne plus exister ou que la matrice qui agglutine les fibres soit affaiblie face à des charges mécaniques, ce qui fait que ces fibres ne travaillent pas, car il leur manque la matrice qui transmet les efforts de couche à couche de la pièce.

Il existe de nombreuses techniques d'essais non destructifs (END) utilisées dans les industries aéronautique, navale et automobile. Les techniques classiques sont les ultrasons, les rayons X, les eddy-currents, les particules magnétiques, les liquides pénétrants, le tap-coin, etc. Sur les méthodes traditionnellement utilisées pour les matériaux métalliques, seuls les ultrasons et la radiographie sont appliqués de façon répandue dans le contrôle de la qualité d'éléments fabriqués avec des matériaux composites. Très souvent, les processus d'inspection basés sur ces méthodes sont lents (surtout dans l'inspection de grandes surfaces telles que celles que l'on peut trouver dans les industries aéronatique, éolienne et navale) et ils sont très coûteux et, en outre, inefficaces pour certains défauts de ces matériaux.

Les ultrasons sont la méthode la plus utilisée dans le contrôle de la qualité des pièces et des composants fabriqués avec ces matériaux composites en fibre de carbone. Cependant, ils rencontrent des difficultés pour détecter des défauts dans ce type de matériaux. Un autre désavantage des ultrasons est qu'il leur faut habituellement un milieu aqueux pour être appliqués et les composites perdent leurs propriétés s'ils captent de l'humidité.

En revanche, la thermographie infrarouge active, avec excitation optique ou lumineuse, est une méthode d'inspection non destructive qui, outre qu'elle est une alternative efficace aux méthodes d'essai non destructif classiques, apporte une série d'avantages tels que :
➢ Inspection sans besoin de contact.
➢ Technologie propre, ce qui permet de réduire les risques d'absorption de liquides des composites avec la détérioration des caractéristiques structurales en résultant.
➢ Rapidité d'inspection.
➢ Équipement simple et maniable.
➢ Sans risque de radiations dangereuses (pas comme dans le cas des rayons X) ; n'a pas besoin de mesures spéciales de sécurité.
➢ Capacité d'inspection de grandes surfaces ou de zones de petites dimensions.
➢ Enregistrements en image (simple interprétation) et sur support informatique (plus grande capacité de stockage et de traitement des données, tout en en faisant une méthode idéale pour son automatisation).

La thermographie infrarouge est efficace pour des stratifiés en fibre de carbone (en tant qu'éléments monolithiques ou comme peau de structures sandwich) jusqu'à de petites profondeurs (plusieurs millimètres). Cela fait que ce soit une méthode appropriée pour une grande partie des pièces et composants fabriqués en ces matériaux, car ils ont d'ordinaire une épaisseur réduite. En outre, l'inspection peut s'effectuer sur les deux faces du matériau en couvrant une plus grande épaisseur.

### FIGURE 1

Configuration de l'essai de thermographie infrarouge pulsée conformément à l'invention.

### FIGURE 2

Représentation de l'évolution de la valeur digitale (VD) ou de la température (T) par rapport au temps (t) en deux points (l'un dans la zone saine et l'autre dans la zone défectueuse) lors d'un essai de thermographie pulsée selon l'invention.

La ligne continue signifie sans défaut, la ligne pointillée signifie avec un défaut et ΔDV/ΔT est le contraste.

### FIGURE 3

Configuration de l'essai de thermographie infrarouge modulée selon l'invention.

### FIGURE 4

Représentation de la valeur digitale (VD) ou de la température (T) ou phase (F) ou amplitude (A) ou partie réelle (R) ou partie imaginaire (I) tout le long de la longueur (1) d'une ligne qui traverse une zone saine et d'une autre qui traverse une zone avec un défaut selon l'invention.

La ligne continue signifie essai sans défaut, la ligne discontinue signifie essai avec un défaut, en indiquant séparément le contraste (ΔVD/ΔT/ΔF/ΔA/ΔR/ΔI).

### DESCRIPTION DE L'INVENTION

Les éléments d'identification sont les suivants :
(101) Pièce, spécimen
(102) Caméra thermographique
(103) Lampes (excitation lumineuse)
(104) Ordinateur (système d'acquisition et traitement des données)
(105) Écran (affichage des données sur thermogrammes/images)
(106) Contraste (défaut)
(107) Ligne profil dans zone sans défaut
(108) Ligne profil dans zone avec défaut
(109) Représentation de pulsation de lumière
(301) Pièce, spécimen
(302) Caméra thermographique
(303) Lampes (excitation lumineuse)
(304) Dispositif Lock-in (synchronisation)
(305) Ordinateur (système d'acquisition et traitement de données)
(306) Écran (affichage des données sur thermogrammes/images)
(307) Contraste (défaut)
(308) Ligne profil dans zone sans défaut
(309) Ligne profil dans zone avec défaut
(310) Représentation de la modulation de lumière

On détaille ci-dessous la méthode d'inspection par thermographie infrarouge pour la détection de variations dans le matériau par perforation dans la poche.

L'équipement utilisé est le suivant :
Caméra de thermographie infrarouge (103, 302): une matrice capteurs recueille le rayonnement infrarouge émis par la surface observée, dépendant de l'émissivité et de la température de la surface, et transforme la quantité d'énergie recueillie par chaque capteur en une valeur numérique qui, grâce à l'apport de l'émissivité de la surface, peut être transformée en valeurs de température. De cette façon, on obtient une carte de la zone vue à des niveaux numériques ou en valeurs de températures, appelée thermogramme (105, 306).
Lampes (103, 303): les lampes sont l'élément utilisé pour exciter (dans ce cas, chauffer) le matériel inspecté, ce qui fait que ce soit une technique active. Pour la méthode de thermographie infrarouge pulsée, on utilise des lampes du type flash photographique à haute énergie. Pour la méthode de la thermographie Lock-in, on utilise des lampes à lumière continue avec, en même temps, un système pour moduler la puissance émise (310), sous forme sinusoïdale, a laquelle un autre système de prise des données sera synchronisé (Lock-in) (304, 305).
Système d'acquisition des données (104, 305): les données sont acquises par un ordinateur qui les stocke et les traite au moyen d'un logiciel pour leur affichage (105, 306), le calcul d'images d'amplitude et de phase, etc. (valeurs qui sont représentées en couleur sur les thermogrammes et les images de ces valeurs) et détection de façon automatisée.

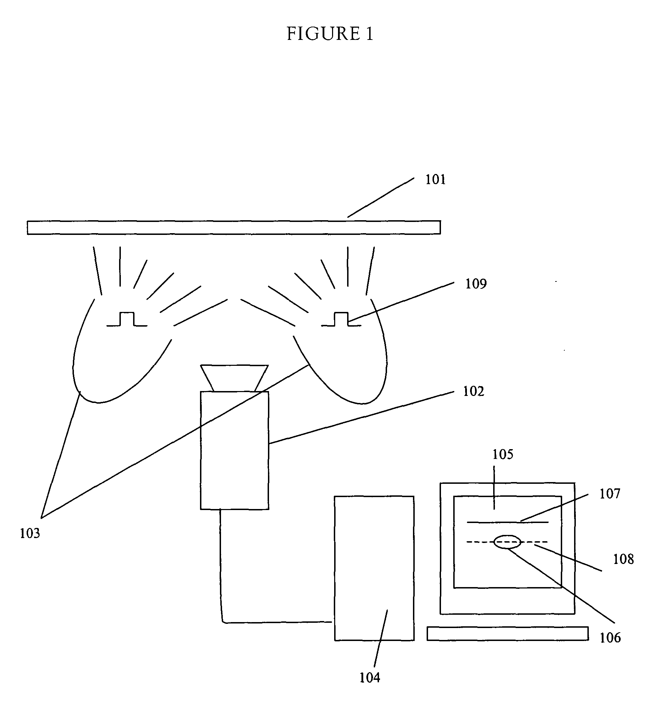

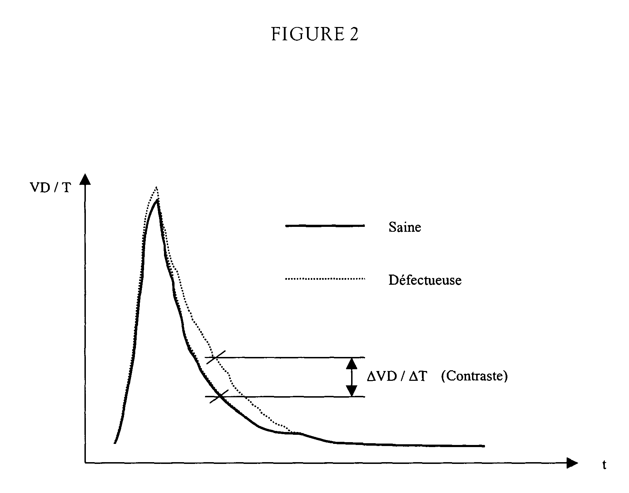

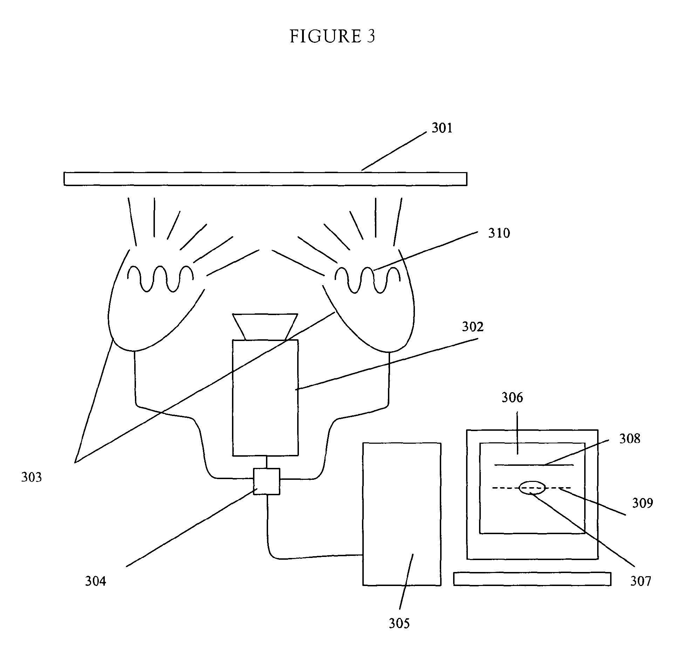

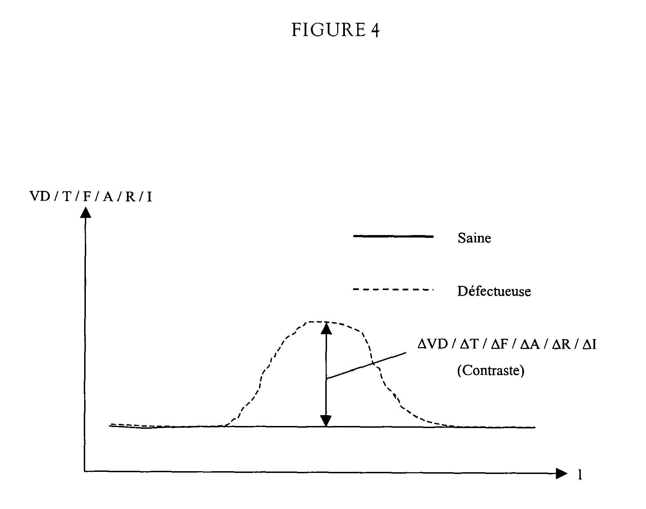

La méthode à suivre est la suivante :
(a) Formation de personnel dans l'utilisation de l'équipement d'inspection et dans les processus de fabrication de matériaux composites en fibre de carbone.
(b) Essai d'inspection initiale sur une pièce type au moyen des techniques de thermographie pulsée et modulée avec excitation optique (figures 1 et 3), pour la caractérisation de la pièce et le calibrage des paramètres du système et apprentissage du système intelligent pour la détection automatisée des défauts.
(c) Au terme du processus de fabrication de la pièce ou du composant, retirer la poche qui enveloppe la pièce (101, 301) après le séchage et la placer sur une base la supportant.
(d) Dans les critères résultant de l'inspection initiale (b) :
   Mettre la caméra thermographique et les lampes en face du spécimen à inspecter.
   Programmer les paramètres d'essai adaptés à la pièce à inspecter: type d'essai (pulsé ou Lock-in), amplitude, durée, fréquence, distances, positionnement de la caméra et des lampes, caractéristiques thermiques du matériau, etc.
(e) Chauffer le spécimen au moyen des lampes (de façon à ne pas dépasser les températures pouvant endommager le matériau) et capter l'évolution de la température de la surface :
(f) Pour la méthode de la thermographie infrarouge pulsée (figure 1) : émettre un flash de lumière (chauffage de durée du rang de millisecondes) (109) en enregistrant l'évolution de la température de la surface pendant le chauffage et le refroidssement de celle-ci.
(g) Pour la méthode de la thermographie infrarouge Lock-in (Figure 3) : chauffer de façon modulée (sinusoïdale) (310) en définissant l'amplitude et la fréquence de l'excitation et en enregistrant le processus de chauffage de façon synchronisée à l'exictation.
(h) Traiter de façon automatique les données acquises (104, 305). Pour la thermographie pulsée, déterminer des contrastes de valeurs (numériques ou de température) entre des zones saines et des zones ayant un défaut, ainsi que les temps de contraste maximum, contraste moyen, etc. qui détermineront les caractéristiques du défaut (figures 2 et 4). Alternativement, on pourra appliquer des algorithmes de Fourier, pour faire une étude mathématique en vue de l'obtention d'images d'amplitude et de phase. Pour la thermographie Lock-in, obtenir les images d'amplitude et de phase de chauffage et, alternativement, celles de la partie réelle et imaginaire (obtenues par l'évolution de la désynchronisation entre l'excitation et la variation de température superficielle) (figure 4).
(i) Déterminer de façon automatique l'existence de zones défectueuses par le contraste caractéristique entre zone défectueuse et zone saine, sur la base de valeurs de niveaux numériques, température, amplitude, phase, partie réelle et/ou partie imaginaire (valeurs qui sont representées en couleur sur les thermogrammes et les images de ces valeurs) (figure 4).
(j) Critère d'acceptation autoamtique : la pièce sera acceptée si les images obtenues (i) sont homogènes ou, au moins, s'il n'y a aucune variation brusque de ces valeurs. En cas d'existence d'un contraste quui déterminerait la présence d'un défaut, la pièce sera acceptée ou rejetée en fonction de la taille de la zone affectée par le défaut selon les conditions requises de fabrication.
(k) Fichier des enregistrements pour une future référence et l'amélioration de l'apprentissage du système (pour une identification plus précise des différents défauts qui pourraient être détectés lors de la même inspection).

Lors du processus d'inspection thermographique optique, des contrastes dus à un autre type de défauts comme, par exemple, des déstratifications, décollages et assemblages défectueux, objets étrangers (morceauxde film protecteur, téflon, métal, etc.), eau, porosité, écrasement du noyau, manque ou accumulation de résine, etc. peuvent apparaître. Le type de défaut sera déterminé par l'évolution caractéristique de la température ou du contraste des températures observée dans la zone du contraste (figures 2 y 4), ainsi que par des contrastes des valeurs calculées de phase, amplitude, partie réele et/ou imaginaire (Figure 4). D'autres méthodes d'essai non destructif pourront être utilisées *a posteriori* dans la zone où a été appréciée l'existence d'un défaut (sans avoir à inspecter toute la surface, mais strictement la zone où a déjà été déterminée auparavant l'existence d'un défaut).

## Revendications

1. Méthode d'inspection de défauts se produisant dans du matériau composite en fibre de carbone par perforation de la poche durant le processus de fabrication, qui est **caractérisée en ce que** :
(a) la poche qui enveloppe la pièce est retirée après le séchage (au terme de la fabrication de la pièce), et
(b) une caméra thermographique (102) et des lampes (103) sont mises en place pour chauffer le matériau au moyen d'une pulsation de lumière (thermographie infrarouge pulsée) (109) en face du spécimen (101) à inspecter, et
(c) Le spécimen est chauffé au moyen des lampes et l'évolution de la température de la surface durant son chauffage et son refroidissement est captée au moyen de la caméra thermographique, les données étant transférées à l'ordinateur ou au système de saisie (104), et
(d) l'existence de défauts est déterminée par l'apparition de contrastes sur les thermogrammes obtenus contrastes en valeurs numériques ou en valeurs de températures ou encore en valeurs de contrastes de températures (valeurs qui sont représentées en couleur sur le thermogrammes).

2. Méthode d'inspection de défauts se produisant dans du matériel composite en fibre de carbone par perforation de la poche durant le processus de fabrication, selon la revendication antérieure, qui est **caractérisée en ce qu'**on ajoute le traitement des données valeurs numériques, températures ou contrastes des températures, de façon à obtenir des valeurs et des images d'amplitude, phase, partie réelle et/ou imaginaire, et/ou ses contrastes, moyennant l'analyse mathématique de Fourier, calculées à partir des données acquises de la caméra thermographique à l'ordinateur lors de l'essai.

3. Méthode d'inspection de défauts se produisant dans du matériel composite en fibre de carbone par perforation de la poche durant le processus de fabrication, qui est **caractérisée en ce que** :
(a) La pièce qui enveloppe la pièce est retirée après le séchage (au terme de la fabrication de la pièce), et
(b) une caméra thermographique (302) et des lampes à lumière continue (3003) modulées en amplitude pour différentes fréquences possibles sont mises en place en face du spécimen à inspecter, pour chauffer le matériau de façon sinusoïdale (310) et au moyen de la caméra thermographique, on fait la saisie sous forme Lock-in (synchronisée) avec l'excitation (thermographie infrarouge Lock-in) (304) pendant le chauffage. Les données sont transférées à l'ordinateur ou au système de saisie (305), et
(c) l'existence de défauts est déterminée par l'apparition de contrastes en valeurs de températures sur les thermogrammes obtenus et en valeurs et images d'amplitude, phase, partie réelle et/ou imaginaire (et/ou ses contrastes), calculées à partir des données acquises de la caméra thermographique à l'ordinateur lors de l'essai.
